# EUROPÄISCHE PATENTSCHRIFT

(11) **EP 1 656 221 B1**
(45) Veröffentlichungstag und Bekanntmachung des Hinweises auf die Patenterteilung: **22.11.2006**
(21) Anmeldenummer: 04763963.8
(22) Anmeldetag: 10.08.2004
(51) Int. Cl.: B09B 1/00, E02D 31/00, B03B 9/06, B02C 13/18, B09B 3/00, B07B 4/06

(54) **DEPONIE FÜR DIE LAGERUNG VON STOFFEN ODER VERBUNDSTOFFEN BZW. GEMISCHEN DARAUS, VERFAHREN ZU DEREN BEHANDELN SOWIE VORRICHTUNG DAZU**
DISPOSAL AREA FOR STORING SUBSTANCES, COMPOSITE SUBSTANCES OR MIXTURES THEREOF, METHOD FOR TREATING THE SAME, AND CORRESPONDING DEVICE
DECHARGE DESTINEE AU STOCKAGE DE SUBSTANCES, DE SUBSTANCES COMPOSITES OU DE MELANGES DE CELLES-CI, PROCEDE DE TRAITEMENT DE CELLES-CI ET DISPOSITIF CORRESPONDANT

(30) Priorität: 13.08.2003 DE 10337375
(43) Veröffentlichungstag der Anmeldung: 17.05.2006
(73) Patentinhaber: Silver Cay Worldwide Corp., Nassau (BS)
(72) Erfinder: Silver Cay Worldwide Corp., Nassau (BS)
(74) Vertreter: Nüsse, Stephan
(86) Internationale Anmeldenummer: PCT/EP2004/008948
(87) Internationale Veröffentlichungsnummer: WO 2005/018840

(56) Entgegenhaltungen:
- DE-A- 3 435 983
- DE-A1- 3 227 340
- US-A- 4 501 788
- US-A- 4 894 148
- US-A- 5 078 543
- US-A- 5 251 827
- US-A- 5 562 586
- US-A- 5 938 128
- US-A- 5 976 435
- US-A- 6 082 929
- US-B1- 6 360 975
- US-B1- 6 389 747

## Beschreibung

Die Erfindung betrifft eine Deponie für die Lagerung von Abfällen und Reststoffen aus festen organischen bzw. anorganischen Stoffen oder Gemischen daraus sowie eine Vorrichtung dafür.

Zu den vorstehend genannten Abfällen gehören beispielsweise industrielle Reststoffe wie Schlacken aus der Metallverhütung, ebenfalls jedoch Hausmüll in unterschiedlicher Zusammensetzung. Letzterer erfasst vornehmlich organische Gemische wie Lebensmittel, Kunststoffverpackungen, Verbundverpackungen, aber auch anorganische Bestandteile wie Glas, Metalle und deren Verbundstoffe.

Probleme bilden diese Gemische und Verbundelemente vor allem bei der Entsorgung, da bislang ein Trennen der Gemische und der sich im Verbund befindlichen Stoffe nicht oder nur unzureichend unter hohem energetischen Aufwand stattfindet. Mehrheitlich werden diese Abfälle verbrannt oder deponiert. Einer werkstofflichen Verwertung werden nur Abfälle mit kleinem Verunreinigungsgehalt -- beispielsweise Dosen aus Aluminiumblech -- unterzogen. Komplexerer Müll wird aufgrund der fehlenden technischen Möglichkeiten bzw. der hohen Kosten durch beispielsweise nasschemische Prozesse oder thermische Prozesse nicht einer Behandlung zur werkstofflichen Verwertung unterzogen.

Bei konventioneller mechanischer Aufbereitung erfolgt der Aufschluss des Verbundelementes über die Korn- bzw. Partikelgröße, die kleiner als die jeweilige Schichtdicke der Komponenten ist. Dieser Aufschluss wird in der Regel über eine zumindest einstufige Feinstzerkleinerung in entsprechenden Mühlen -- etwa Hammer-, Prall- oder Gegenstrom-Mühlen -- durchgeführt, gegebenenfalls mit Unterstützung von Stickstoff zur Inertisierung der Tiefkühlung.

Die US-A-5 251 827 enthält einen Verfahrensstammbaum zum Rückgewinnen von Fasern aus glasfaserverstärkten Kunststoffen od.dgl. mit einem Schredder, nach dem das zerkleinerte Gut pulverisiert wird. Aus diesem Pulver werden freigesetzte Fasern separiert und das verbleibende pulverisierte Haufwerk beispielsweise als Füllstoff eingesetzt. In diesem Stammbaum findet sich eine als pulveriser bezeichnete Mikromühle.

Bei einem Verfahren nach WO 95/25595 zum Behandeln von Verbundelementen aus festen organischen und/oder anorganischen Verbundwerkstoffen wie Verbunden aus Metall/Metall, Kunststoff/Kunststoff, Metall/Kunststoff oder mineralischen Verbunden mit Metallen und/oder Kunststoffen wird ein Gemisch den Abrisskanten mit einer Beschleunigung von 20 bis 60 m/sec² zugeführt und in den Wirbeln eine das Gemisch beschleunigend aufschließende Bewegung hergestellt. Zudem wird während dieses Trenn- oder Aufschließvorganges die Adhäsion zwischen den Komponenten der Feststoffteile durch deren Kraft übersteigende Beschleunigungs- und Reibungskräfte aufgehoben, und es werden die Komponenten der Feststoffteile voneinander unter Trennung der Schichten des genannten Verbundwerkstoffes gelöst bzw. voneinander abgezogen.

Die bekannten Verfahren haben also die Aufgabe, Verbundstoffe und Stoffgemische aufzubereiten, zu verkleinern, zu homogenisieren und auch teilweise oder total aufzutrennen. Solche Verfahren beruhen insbesondere auf mechanischer Scherung und Quetschung, auf relativ unkontrollierter Zertrümmerung oder auf Auftrennung in hoch energetischen Wirbeln.

In Kenntnis dieser Gegebenheiten hat sich der Erfinder das Ziel gesetzt für -- auch bereits bestehende -- Deponien ein Sanierungskonzept zu schaffen, das auch eine Verlagerung der Deponiekörper beinhaltet, um Raum für eine andere Nutzung -- z.B. für städtebauliche Maßnahmen -- zu erhalten. Zudem soll ein Verfahren entwickelt werden, mit dem Gemische und Verbundelemente, insbesondere Hausmüll, behandelt und deponiert werden können.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale. Zudem fallen in den Rahmen der Erfindung alle Kombinationen aus zumindest zwei der in der Beschreibung, der Zeichnung und/oder den Ansprüchen offenbarten Merkmale. Bei angegebenen Bemessungsbereichen sollen auch innerhalb der genannten Grenzen liegende Werte als Grenzwerte offenbart und beliebig einsetzbar sein.

Erfindungsgemäß wird zum Erstellen der Deponie in Erdreich eine Wanne mit Wannenboden und Seitenwänden angeordnet, deren Wannenboden zumindest zwei -- bevorzugt dreiwasserdichte Schichten mit Bestandteilen eines keramischen Bindemittelsystems (CBS) enthält, deren Zusammensetzung weiter unten erörtert wird. Dabei hat es sich als günstig erwiesen, zwischen der obenliegenden wasserdichten Schicht und eingebrachtem Deponiegut zumindest eine wasserdichte Kunststofffolie flächig anzuordnen, wobei vor allem verfestigtes Haufwerk als Deponiegut gelagert werden soll.

Nach einem anderen Merkmal der Erfindung gehen vom Wannenboden geneigte Seitenwände in einem Winkel von 90° bis 150°, bevorzugt etwa 130°, aus. Zudem soll der Wannenboden in einem Winkel unter 10° zur Horizontalen geneigt sein, um den Abfluss von Wasser zu unterstützen.

Als günstig hat es sich erwiesen, auf der Deponie eine Abdeckung vorzusehen, die wenigstens zwei wasserdichte Schichten enthält, wobei auf ihnen zumindest eine Sickerschicht zur Abführung von Regenwasser angeordnet ist. Diese Sickerschicht ist zudem mit einer Drainage ausgestattet. Diese Sickerschicht wird zudem von einer Humusschicht überlagert, die gegebenenfalls eine geringmächtige Slurry-Schicht als Erosionsschutz trägt.

Erfindungsgemäß soll zur Sanierung und Verlagerung der Deponiekörper das eingelagerte Material einer Zwischenbehandlung unterzogen werden. Dabei werden Wertstoffe dem Abfall entzogen und in die Wirtschaftskreisläufe als Sekundär-Rohstoffe zurückgeführt. Verdichtungsmaßnahmen tragen zusätzlich zu einer deutlichen Verringerung des zu deponierenden Volumens bei.

Die täglich anfallenden Mengen an Hausmüll sollen vor der Deponierung einer Aufbereitungsanlage zugeführt werden, die weitestgehend ein werkstoffliches Recycling ermöglicht, wobei neben Sekundär-Rohstoffen auch Wasser und Kompost gewonnen wird. Durch diese Maßnahme kann das Volumen des zu deponierenden Mülls drastisch reduziert werden.

Im Rahmen der Erfindung wird ein bestehender Deponiekörper in eine neue, an einem anderen Standort zu errichtende Deponie verbracht. Die neue Deponie muss sowohl das vorhandene Deponiegut als auch die bestehende Abdeckung und den Unterbau der alten Deponie aufnehmen.

Die aus der alten Deponie entnommenen Abfälle werden einer Zwischenbehandlung unterzogen, dies einerseits, um das Deponievolumen zu reduzieren, sowie andererseits auch, um eine Separation von Wertstoffen zu ermöglichen. Diese Zwischenbehandlung entspricht dem nachfolgend beschriebenen Verfahren analog der Aufbereitung des täglich neu anfallenden Mülls. Es wird davon ausgegangen, dass in der Folge die neue Deponie für nur eine Klasse ausgelegt werden muss (Deponietyp: Inertstoffdeponie).

In einem Stufenplan wird die neu zu bauende Deponie, welche einen segmentierten Aufbau haben wird, schrittweise eine Erweiterung erfahren. Das zu erwartende Deponievolumen wird über die Zeitachse absolut wie auch prozentual abnehmend sein, da die Zwischenbehandlung des Abfallgutes schrittweise verfahrenstechnisch als auch kapazitätsmäßig hochgefahren wird. Es ist nach dem Endausbau der Anlage von einer Reduktion um mehr als 95 % des zu deponierenden Volumens auszugehen.

Der konzeptionelle Ablauf zur Deponiesanierung und Rekultivierung gestaltet sich wie folgt: Zuerst wird das Deponievolumen ermittelt und eine Analyse des Deponiegutes und deren Auswertung durchgeführt. Dann wird der neue Deponiestandort festgelegt sowie die Zwischenbehandlungsanlage. Es folgt die Planung und Projektierung des neuen Deponiestandortes, die Logistikplanung usw. hinsichtlich einer Genehmigung zum Bau und Betrieb des Vorhabens sowie die Planung und Projektierung der Zwischenbehandlungsanlagen. Nach den Genehmigungsverfahren für die Deponie sowie die Zwischenbehandlungsanlage erfolgt der Bau der ersten Etappe der neuen Deponie und Aufbau der ersten Zwischenbehandlungsstufe für das alte Deponiegut, dann der Beginn der Sanierung der Alt-Deponie mit Abtransport, Zwischenbehandlung und Einlagerung des Abfalls in die neue Deponie. Anschließend wird der alte Deponiestandort gemäß den Anforderungen der künftigen Nutzung rekultiviert, die Zwischenbehandlungsanlage wird ausgebaut einschließlich des etappenweisen Ausbaus der Kapazitäten. Der Vorgang endet mit dem Abschluss der Verlagerung und der Sanierung des alten Deponiestandortes durch Rekultivierungsmaßnahmen.

Von erfinderischer Bedeutung ist der Einsatz eines keramischen Bindemittelsystems CBS in Form von sog. CBS-Consolid zur Stabilisierung des Bodens bzw. der Immobilisierung des Abfalls und zur Abdichtung. Das Bindemittelsystem CBS ist ein anorganisches Bindemittel für hydraulische, erhärtende Massen, bei dem Kieselsäure, Tonerde, Eisenoxid und Kalk enthaltende Stoffe vermengt, gemahlen und bis zur Sinterung gebrannt werden. Der Hausmüll wird vorzerkleinert, homogenisiert und mit kalziumhaltigen Additiven, wie Dolomit, Calcit, Mergel, insbesondere Kalkmergel od.dgl. Stoffen sowie mit Aluminiumoxid enthaltenden Zuschlagstoffen-Korundschleifstaub, Tonmergel, Klinker -- vermischt und verbrannt. Dem nach der Verbrennung erhaltenen Produkt werden vor dem Aufmahlen bis zu 40 Gew.-% -- vorzugsweise etwas mehr als 10 Gew.-% -- Gerüstsilikate beigemengt, und das erhaltene Produkt wird auf eine sehr geringe Korngröße gemahlen.

Dieses Bindemittelsystem umfasst vorteilhafterweise eine Flüssigphase sowie eine feste Phase, welch letztere aus feinstkörnigem hydraulischem Bindemittel und Kalkhydrat sowie bis zu 10 % -- bevorzugt etwa 4 % -- organischem Anteil besteht; die Flüssigphase soll eine Mischung monomolekularer und polymolekularer grenzflächenaktiver Substanzen, Lösungsvermittler, Emulgatoren und Katalysatoren mit einem Gehalt an Propylendiamin, Dimenthylammoniumchlorid und Isopropyl-Alkohol sein. Durch das keramische Bindemittelsystem ist eine irreversible Agglomeration der Fein- und Feinstteilchen der behandelten Schicht gegeben mit einer hohen Verdichtung des mit dem Bindemittelsystem verbundenen Bodenanteils. Die in dem Innenraum der Deponie gelagerten Abfälle od.dgl. Stoffe sollen durch die Beigabe mineralischer Komponenten gebunden sein, insbesondere durch jenes keramische Bindemittel (CBS).

Gegenüber herkömmlichen Stabilisierungssystemen zeichnet sich CBS-Consolid durch eine deutliche Verbesserung der Bodeneigenschaften aus. Die Tragfähigkeit wird um das Dreibis Fünffache erhöht. Durch die Abdichtung gegen eindringendes Wasser wird die Frostbeständigkeit deutlich erhöht. Potentielle Schadstoffe können ebenfalls nicht mehr ausgelaugt werden. Die Bodenbehandlung ist relativ einfach durchzuführen und unterliegt keinerlei zeitlicher Beschränkung beim Einbau. Die Bodenverbesserung ist permanent und nimmt mit der Zeit zu, es tritt damit ein positiver Langfristeffekt auf. Durch die Verwendung von vor Ort vorhandenem Boden können die Kosten erheblich reduziert werden, ebenfalls wird am Zukauf von teuren mineralischen Rohstoffen gespart. Analog gilt dies auch für alle anderen zu bindenden Materialien, welche durch das CBS-Consolid System verfestigt werden können.

Die grundsätzliche Wirkungsweise des Consolid-Systems ist die eines natürlichen organischen Polymers, welches sich an der Oberfläche der Tonminerale bindet, die Eigenschaften dieser tonigen Minerale ändert und die Bildung stabiler Aggregate ermöglicht.

Das hier beschriebene Konzept zur Deponiesanierung und Abfallaufbereitung zeichnet sich durch seine Nachhaltigkeit, eine weitestgehende Schonung der Umwelt und der natürlichen Ressourcen aus sowie durch eine äußerst günstige Kostenstruktur. Die dargestellte Aufbereitungsanlage für Hausmüll ermöglicht eine sortenreine Weiterverwendung von Wasser, Kompost, Biogas, Metallen und Kunststoffen, sowie die Gewinnung von elektrischer Energie. Durch ein besonderes Verfahren können die mineralischen Bestandteile als keramisches Bindemittel CBS in der Bauindustrie Verwendung finden. Nur weniger als 5 % des Hausmülls muss schlussendlich deponiert werden. Dies alles trägt zu einer hohen Kostenreduzierung bei. Mit Hilfe des sog. Consolid-Verfahrens können Deponien langfristig abgedichtet werden, so dass die fertig gestellte Deponie anderweitig genutzt zu werden vermag und keine Sanierungen mehr erforderlich sind.

Im Rahmen der Erfindung liegt ein Verfahren der eingangs erwähnten Art, mit dem der Abfall -- insbesondere Hausmüll -- entwässert, enthaltene Biomasse abgetrennt wird und anschließend eine Separation von Metallen/Kunststoffen erfolgt, welche in Wirtschaftskreisläufe als Sekundär-Rohstoffe zurückgeführt werden. Vor dem Einleiten der Abfälle in die Deponie sollen diese durch die Beigabe mineralischer Komponenten gebunden sowie eigene Bindekräfte aktiviert sowie Schadstoffe in den Abfällen immobilisiert werden.

Als günstig hat sich auch eine Reststoffseparation erwiesen, nach der ausgeschiedene Mineralstoffe und/oder gesondert zugeführte Schlacken bzw. Aschen zu keramischem Bindemittel verarbeitet werden. Während dieses Verfahrens werden Hauptfraktionen hergestellt in Form von:
Wasser;
Biomasse/Kompost/Biogas;
Metalle wie Al, Fe, Cu-Metalle od.dgl.;
Restmüllfraktionen;
Reststoffe.

Mineralstoffe aus der Restmüllfraktion und/oder den Reststoffen und/oder aus letzteren entstehende Asche können als Rohmaterial zum Herstellen jenes Bindemittels (CBS) eingesetzt werden. Es soll Schlacke gesiebt sowie während eines Zerkleinerungsvorganges mit Hüttensand und/oder Kraftwerksasche und/oder Gerüstsilikaten gemischt werden.

Die erfindungsgemäße Anlage basiert auf dem Prinzip des sog. Recyclings. Wertstoffe werden in der von der Industrie geforderten Qualität zu konkurrenzfähigen Kosten umweltfreundlich hergestellt. Die Umwelt wird einerseits durch die Reduktion der zu deponierenden bzw. verbrennenden Abfällen entlastet und andererseits werden -- durch die Rückführung der gewonnenen Rohstoffe in die Industrie -- die natürlichen Rohstoff-Quellen geschont.

Im Rahmen der Erfindung liegt es auch, dass die Gemische und Verbundstoffe mittels eines mechanischen Verfahrens getrennt und separiert werden, bei dem die Impulsgabe bei plötzlichem Anhalten eines transportierten Partikels genützt wird. In dem Verbundstoff oder dem Gemisch wird durch eine dessen Fluss plötzlich unterbrechende Einrichtung der Aufschluss bzw. eine Trennung der Bestandteile mittels eines Impulses durchgeführt; in bzw. zwischen den Schichten der Verbundelemente treten Schockwellen auf, welche diese Verbundelemente aufschließen. Dazu hat es sich als günstig erwiesen, dass dem in einem Rotor mit vertikaler Achse spiralartig abwärts erzeugten Förderweg Prozessluft in einem steigenden Strömungsweg gegenläufig geführt wird; die erwähnte Schockwelle wird bevorzugt an einer Prallwand des Rotors zwischen den Schichten des Verbundstoffes erzeugt.

Nach einem weiteren Merkmal der Erfindung drehen sich zwei einander in radialem Abstand koaxial zugeordnete Wandflächen relativ zueinander um ihre Achse, und zwischen von den Prallwänden radial abragenden Prallflächen werden die von Zentrifugalkräften bewegten Verbundstoffe bzw. Gemische bewegt und aufgeschlossen. Der Aufschluss des Verbundes kann bei Aufprall auf eine Prallwand erfolgen, und seine metallischen Bestandteile werden kugelartig verformt; bevorzugt wird während des Verformungsvorganges der schichtartige metallische Bestandteil aufgerollt.

Als günstig hat es sich erwiesen, das Verbundelement auf eine Korngröße von 10 mm bis 50 mm vor dem Trenn- oder Aufschließvorgang zu zerkleinern, gegebenenfalls auch einer thermischen Vorbehandlung zu unterziehen. Zudem kann der Austrag aus dem Trenn- oder Aufschließvorgang vorteilhafterweise einem Separations- und/oder Siebvorgang bzw. einem Abtrennvorgang für Nichteisenmetalle unterzogen werden.

Nach einem weiteren Merkmal der Erfindung wird das Separieren auf Trenntischen und/oder durch Fließbettseparatoren durchgeführt, wobei die Metall- und/oder Kunststoffteile nach dem Separieren verdichtet werden. Dazu ist es vorteilhaft, die Kunststoffe durch turbolaminare Separation und Identifikation voneinander zu trennen und/oder die Metall- und/oder Kunststoffanteile nach dem Separieren zu extrudieren.

Basierend auf inhärenten Materialeigenschaften -- wie Dichte, Elastizitätsmodul (= Steifigkeit = Widerstand gegen Verformung), Festigkeit und molekularer Konstellationbreiten sich erfindungsgemäß erzeugte Stoßwellen innerhalb der Materialien mit unterschiedlicher Ausbildung bezüglich Fortpflanzungsgeschwindigkeit, Frequenz und Amplitude aus. Falls die durch diese Schockwellen generierten Kräfte beim Aufprall der Partikel die Adhäsionskraft der Interfacesder Kontaktflächen zwischen den einzelnen Materialphasenüberschreiten, führt die auftretende Mikroscherung zur Ablösung, bzw. zur Separierung. Dieses Prinzip wird erfindungsgemß gezielt und vorsätzlich genutzt.

Das typische Fließverhalten bei Überschreiten der elastischen Dehnung z.B. bei Metallen, respektive die inhärente Elastizität von z.B. Kunststoffen resultieren in bleibenden sphärischen Verformungen bzw. in -- teilweiser -- Rückfederung in die originale Partikelform (resilience). Durch dieses Phänomen werden die phasengetrennten Elemente von Verbundstoffen mittels bekannter und etablierter Technologien -- z.B. auf mechanischer, hydraulischer oder pneumatischer Basis -- relativ leicht sortierbar.

Das beschriebene Verfahren zeichnet sich durch die Einfachheit und Funktionalität der erfindungsgemäßen Vorrichtung aus, und es ist ein entsprechend einfacher oder wenig problematischer Betrieb vorgegeben. Die gewollte Einfachheit des Konzeptes und des Aufbaus der beschriebenen Rotormaschine läßt deren technische Realisierung problemlos zu. Die Ausnutzung der materialwissenschaftlichen Erkenntnisse, von Vergütungsverfahren, von computer- und simulationsgestützter Konstruktionsoptimierung, sowie die mögliche Adaption und Optimierung der Prozessparameter wird die erwartbare Wirkleistung weiter steigen.

Im Rahmen der Erfindung liegt eine Vorrichtung zur Durchführung des beschriebenen Verfahrens, bei der in den Innenraum eines Rotors der Förderweg für die Verbundstoffe bzw. das Gemisch gegenläufig zum Strömungsweg von Prozessluft geführt sowie die Werkstoffzuführung im Firstbereich des Rotors angeordnet ist. Der Förderweg soll zwischen zwei zueinander in Abstand relativ bewegbaren Wandflächen verlaufen, von denen in den Förderweg beidseits sowie zueinander versetzte Prallflächen abragen.

Nach weiteren erfindungsgemäßen Merkmalen sind die Wandflächen koaxial gekrümmt und/oder in Rotationsrichtung des Rotors drehbar gelagert.

Aufgrund der Einfachheit des Kernprozesses, des Separators und der erkennbar großen Durchsatzleistung sollten die resultierenden Trennkosten eigentlich relativ niedrig ausfallen. Die entsprechenden Kosten repräsentieren schlussendlich den totalen Ressourcenkonsum wie Transportleistung, Energie, Arbeitsleistung (immer mit Konsum von Ressourcen verbunden !), Wasser-Luft und Landverbrauch, Substitutionseffekt od.dgl. und demzufolge den gesamten Umwelteinfluss. Falls die Menge der erfolgreich behandelten Abfallströme und deren Konversion in Werkstoffströme durch die wirtschaftliche Attraktivität des Prozesses ansteigt, resultiert daraus durch die resultierende Substitution natürlich eine entsprechende Senkung des Verbrauchs an primären Ressourcen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine skizzenhafte Schrägsicht auf ein erfindungsgemäßes Modell einer Deponie;
- Fig. 2, 3:: jeweils einen vergrößerten Teilschnitt durch den Bodenbereich der Deponie bzw. deren Abdeckung;

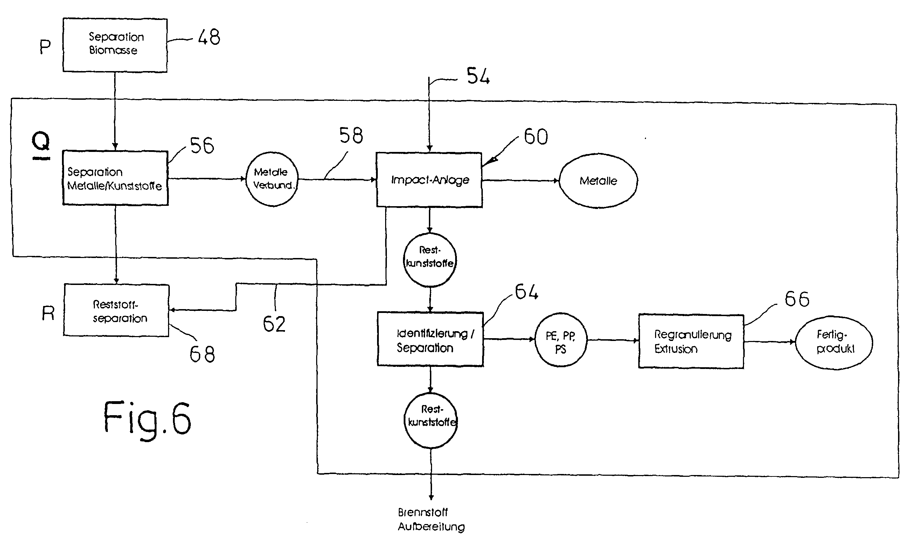

- Fig. 4 bis Fig. 6:: Verfahrensschemata zur
- Entwässerung;
- Separation von Biomasse;
- Separation von Metallen/Kunststoffen;
- Fig. 7, 8:: zwei Verfahrensstammbäume zur Reststoffseparation;
- Fig. 9:: einen Verfahrensstammbaum zur Herstellung eines keramischen Bindemittelsystems;
- Fig. 10:: einen skizzenhaften Verfahrensablauf beim Aufschluss eines Verbundelementes an einer Prallwand mit drei Schritten;
- Fig. 11:: die Veränderung des der Prallwand zugeführten Verbundelementes in drei Stufen sowie
- Fig. 12:: die vierte Stufe des Verbundelements;
- Fig. 13:: die skizzenhafte Draufsicht auf rotierende Prallflächen während des Verfahrens;
- Fig. 14:: eine skizzenhafte Seitenansicht eines Rotors.

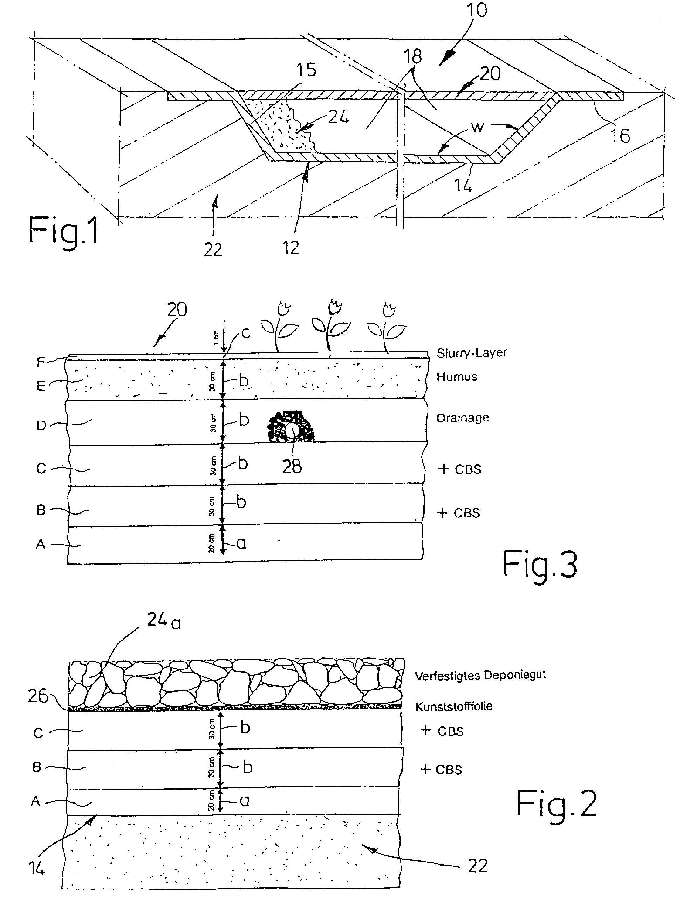

Eine Deponie 10 ist gemäß Fig. 1 mit einer als Wanne 12mit in einem Winkel w von etwa 130° vom Wannenboden 14 nach außen geneigten Seitenwänden 15 -- ausgebildeten Abdichtung gegen Grundwasser führendes Erdreich 22 ausgestattet. Der Innenraum 18 dieser Wanne 14 wird mit -- an einer mit einem Wannenrand 16 fluchtenden Abdeckung 20 -- überspanntem Deponiegut 24 gefüllt.

Die Abdichtung gegen aus dem Deponiegut 24 gegebenenfalls austretende Flüssigkeiten nach unten erfolgt gemäß Fig. 2 durch eine wasserundurchlässige Kunststofffolie 26, die unterhalb einer Schicht aus verfestigtem Deponiegut 24ₐ verläuft. Der Unterbau der Wanne 12 wird aus -- durch Zugabe von Additiven entstandenen -- wasserdichten Schichten A bzw. B, C hergestellt, deren Dicken a (Schicht A) bzw. b 200 bzw. 300 mm messen. In die Schichten B und C wird zusätzlich auch sog. CBS eingebracht, ein keramisches Bindemittelsystem. Die Abdichtung gegen die wasserführende Erdschicht 22 wird selbst bei einer Zerstörung der aufliegenden Kunststofffolie 26 durch die Abdichtschichten A bis C sichergestellt, da diese absolut wasserundurchlässig sind. Dies gilt auch für den aufsteigenden Pfad vom wasserführenden Erdreich 22 zum Wanneninnenraum 18. Das Deponiegut 24 wird entwässert und stabilisiert bzw. immobilisiert eingebracht. Um aus ihm eventuelles Sickerwasser abzuleiten, wird die Wanne 12 mit einer Neigung von 3 % ausgeführt. Dadurch kann das Wasser gesammelt und über -- nicht gezeigte -- Sickerwasserleitungen aus dem Wanneninnenraum 18 entfernt werden.

Die Abdeckung 20 der Deponie 10 weist nach Fig. 3 ebenfalls drei Abdichtschichten A, B, C auf, denen eine Sickerschicht D der Dicke b von 300 mm mit Drainage 28 zum Abführen von Regenwasser aufliegt. Diese Sickerschicht D trägt eine zur Begrünung der Flächen dienende Humusschicht E von 300 mm Dicke b. Um den Humus Halt zu geben, d.h. ihn gegen Auswaschen durch Regenfälle und Oberflächenwasser zu sichern, wird eine dünne Slurry-Schicht F geringmächtiger Dicke c von 10 mm als Erosionsschutz aufgetragen.

In die Deponie 10 verbrachte Abfälle werden zuvor durch die Beigabe mineralischer Komponenten gebunden. Durch die Zugabe spezieller Additive werden die enthaltenen Schadstoffe immobilisiert. Durch diese Behandlung der Abfälle findet eine Aktivierung der eigenen Bindekräfte statt, was zu einer irreversiblen Agglomeration der enthaltenen mineralischen Komponenten führt.

Der tägliche anfallende Hausmüll wird in einer mehrstufigen Aufbereitungsanlage aufgetrennt. Dabei werden verschiedene Inhaltsstoffe entzogen bzw. separiert. Der Restmüll der übrig bleibt, wird zu einem hochkalorischen Brennstoff verarbeitet, der in einem thermischen Kraftwerk in elektrische Energie umgewandelt wird.

Der besseren Übersicht halber seien vorab die Verfahrensschritte für die im Prozess generierten Hauptfraktionen als sog. Output vorgestellt:
- N:: Wasser, welches nach einem Reinigungsprozess (Wasseraufbereitung) als Gebrauchswasser in der Landwirtschaft oder Industrie verwendet werden kann.
- P:: Biomasse/Kompost, die/der in einer Kompostieranlage zu hochwertigem Dünger bzw. Bodenverbesserer verarbeitet wird.; entstehendes Biogas kann zur Energiegewinnung genutzt werden.
- Q:: Diverse Metalle wie Al, Fe, Cu-Metalle usw., die in einem trocken-mechanischen Prozess (Impact-Verfahren) getrennt sowie der metallverarbeitenden Industrie zur Verfügung gestellt werden; verschiedene Kunststoffe, die über Identifikationssysteme sortenrein separiert, in Regranulierungs/Extrusionsanlagen zu Fertigprodukten verarbeitet sowie in der Industrie abgesetzt werden.
- R:: Restmüllfraktionen, die in einem thermischen Kraftwerk als Brennstoffsubstitut eingesetzt werden können, um das kalorische Potential zu nutzen; dabei wird neben elektrischer Energie auch thermische Energie erzeugt, die sowohl zum Trocknen des Schlammes aus der Abwasseraufbereitung als auch zur Unterstützung des mechanischen Entwässerungsprozesses genutzt wird. Die entstehende Asche aus dem Prozess wird als Rohmaterial zur Herstellung von CBS genutzt, einem zementartigen Bindemittelsystem, hergestellt aus den Mineralstoffen der Restmüllfraktion.
- S:: Verbleibende Reststoffe werden immobilisiert und in eine Inertstoff-Deponie als stabiles Deponiegut eingebracht.

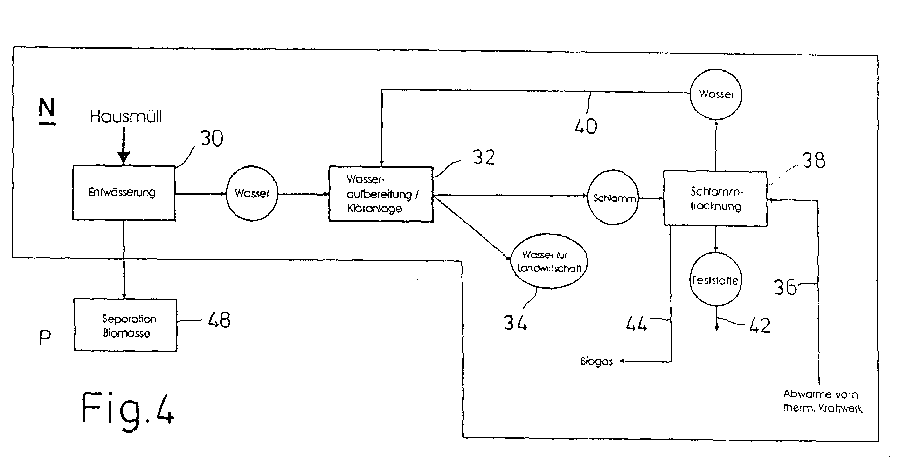

Der Fig. 4 ist die Behandlung von Hausmüll in einem Verfahrensabschnitt N zu entnehmen. Als erstes wird dem Hausmüll auf Zentrifugal- und Friktionstrockner 30 mechanisch das Wasser entzogen. Der Wassergehalt wird von bis zu 60 % (Input) auf etwa 25 % gesenkt, wobei ein relativ großer Teil des Restwassers in der Biomasse des Hausmülls gebunden bleibt.

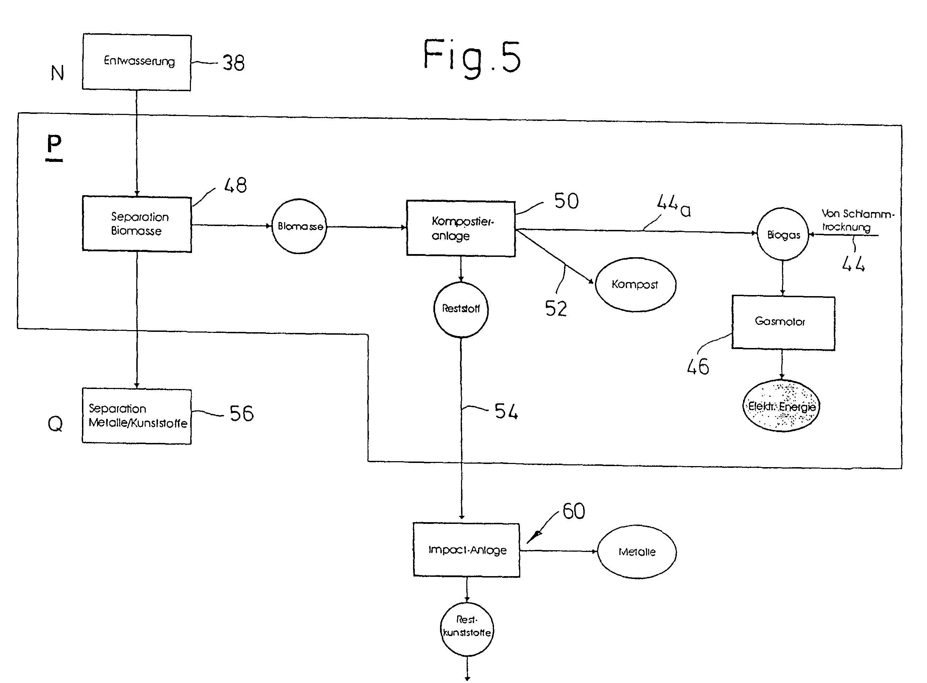

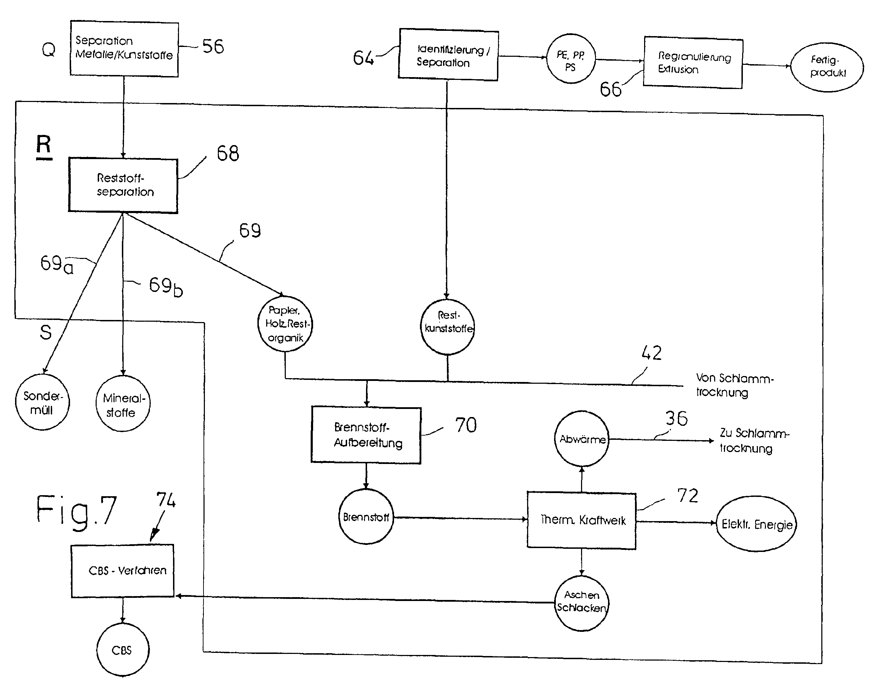

Die angefallene Wassermenge wird in einer konventionellen, mechanisch-biologischen Kläranlage 32 gereinigt. Durch die verschiedenen Klärvorgänge erreicht man die Trennung in Schlamm und Wasser. Das entstandene saubere Wasser wird dem Wasserkreislauf zurückgegeben, z.B. bei 34 in die Landwirtschaft. Dem Schlamm wird in einer -- beispielsweise mittels durch eine Leitung 36 von einem in Fig. 7 skizzierten von einem thermischen Kraftwerk 72 zugeführte Abwärme betriebenen -- Schlammtrocknung 38 die restliche Wassermenge entzogen. Dieses Wasser wird dann über eine Leitung 40 wieder in die Kläranlage 32 gegeben und gereinigt, der getrocknete Schlamm/Feststoff bei 42 zu einer Brennstoffaufbereitung weitergegeben. Bei der Schlammtrocknung erzeugtes Biogas gelangt durch eine Leitung 44 zu einem in Fig. 5 angedeuteten Gasmotor 46, dank dessen daraus elektrische Energie entsteht.

In einem zweiten Schritt wird dem getrockneten Hausmüllim Verfahrensabschnitt P -- die Biomasse entzogen. Hierzu wird der gesamte Müll in eine Separationsanlage 48 gegeben. Durch verschiedene trockenmechanische Separationsprinzipien wie Sichtung, Schwerteilauslese, Siebung und dgl. kann die dem Hausmüll entzogene Biomasse in eine Kompostieranlage 50 weitergegeben werden. Dort wird in einem Reaktor die vorhandene Substanz in Kompost und Biogas umgewandelt. Das beim Abbauprozess gewonnene Biogas wird durch eine Leitung 44ₐ für elektrische Energie und Wärme genutzt. Der durch eine Leitung 52 ausgetragene Kompost wird in der Landwirtschaft und im Gartenbau eingesetzt, Reststoffe gelangen durch eine Leitung 54 zu einer sog. Impact-Anlage 60.

In einem dritten Verfahrensabschnitt Q werden dem -- von der Separationsanlage 48 für die Biomasse kommendenRestmüll in einer weiteren Separierungsstation 56 die Metalle und Kunststoffe entzogen; mittels eines Abscheidungsverfahrens können die Stoffe in die gewünschten Fraktionen getrennt werden, wie weiter unten erörtert. Die Metall- und Kunststoff-Fraktionen gelangen in ein trocken-mechanisches Verfahren. Dabei werden zuerst über eine Leitung 58 die Eisen-Metalle entzogen. Die Trennung von den Restmetallen und Kunststoff erfolgt nach Leitung 58 in jener Impact-Anlage 60 im sog. Impactverfahren. Durch Impulsgabe und plötzliches Anhalten (Impulsunterbrechung) sowie hochfrequente Reflektionen der Partikel werden deren physikalische Unterschiede zum Aufschluss genutzt. Die nachfolgende Siebung und Separation ermöglicht eine Trennung in Metalle und Kunststoffe. Die Metalle können weiter verwendet werden; es wird vor allem Aluminium in der Aluminiumindustrie wieder verwendet.

Die Kunststoffe gelangen zu einer Identifizierungseinrichtung / Separation 64. Die dabei separierten Kunststoffe wie Polyethylen (PE), Polypropylen (PP), Polystyrol (PS) und dgl. werden in einer Station 66 zur Regranulierung bzw. Extrusion in ein Fertigprodukt verarbeitet. Die Restkunststoffe werden als hochkalorischer Bestandteil der Brennstoffaufbereitung zugeführt. Mit 62 ist ein Reststoffaustrag der Impact-Anlage 60 bezeichnet, welcher diese mit einer Reststoffseparation 68 verbindet.

Die nun noch vorhandenen Reststoffe bestehen im Wesentlichen aus Mineralien, Papier, Holz, Restorganik und Deponiegut. Letzterer wird in Verfahrensabschnitt R durch eine Leitung 69ₐ ausgetragen; Leitung 69_{b} führt die Mineralstoffe ab. Zusammen mit den Restkunststoffen aus der Metall- und Kunststoff-Separation 56 gelangt Papier, Holz und Restorganik durch eine Leitung 69 in eine Brennstoffaufbereitung 70. Der dabei entstehende Brennstoff dient einem thermischen Kraftwerk 72 als Energielieferant. Die erzeugte elektrische Energie wird in das Stromnetz eingespeist. Die Abwärme wird -- wie erwähnt -- über die Wärmeleitung 36 der Schlammtrocknung als Heizquelle zur Verfügung gestellt. Die entstehenden Aschen bzw. Schlacken werden zur Produktion des erwähnten keramischen Bindemittelsystems in einer CBS-Herstellungsanlage 74 verwendet.

Aus den Mineralstoffen der Reststoff-Separation 68 und aus den Aschen aus der thermischen Verwertung wird jenes CBS hergestellt, also -- wie gesagt -- ein zementartiges Bindemittel, welches vor allem mineralischen Abfallprodukten entnommen wird. Verwendung findet es vorwiegend in der Bauindustrie.

Das angefallene Deponiegut 24 muss ebenfalls entsorgt werden, und dies geschieht durch ein spezielles Verfahren der Immobilisierung in Station 78 des Verfahrensabschnittes S. Dazu findet Consolid und CBS Verwendung. Das stabilisierte Deponiegut 24ₐ ist nun gegen äußere Umwelteinflüsse -- wie etwa Wasser -- geschützt und kann auf einer Deponie gefahrenlos endgelagert werden.

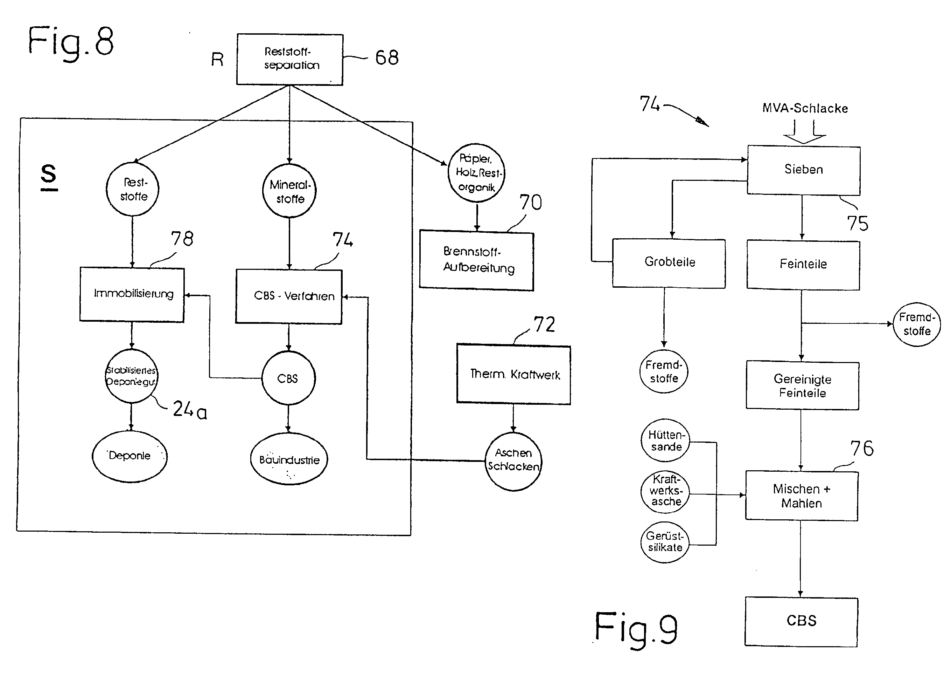

Fig. 9 befasst sich mit dem Herstellen des erwähnten keramischen Bindemittelsystems CBS. Das hier vorgestellte Verfahren benötigt Rohstoffe, die bei der Verbrennung von Hausmüll, Kohle oder bei der Verhüttung von Metallerzen entstehen. Diese Schlacke ist die Basis für das zementartige Bindemittel CBS, das als hochwertiger Ersatz für Zement eingesetzt werden kann bei erheblich niedrigerem Aufwand. Der sog. MVA-Schlacke werden Fremdstoffe wie Metall, Papier und Kunststoff entzogen, welche dann dem Wertkreislauf wieder zugeführt werden können. Die Reststoffe werden mit Zuschlagstoffen -- Hüttensand, Kraftwerksasche, Gerüstsilikate, Tonminerale -- vermischt und konditioniert. Die MVA-Schlacke wird zuerst in einer Station 75 gesiebt, die Feinteile werden gereinigt und einer Mühle bzw. einem Mahlwerk 76 zugeführt, in der sie mit Hüttensand, Kraftwerksasche und Gerüstsilikaten gemischt wird.

Das CBS ermöglicht eine sinnvolle Verwertung der MVA-Schlacke, für die somit keine Deponiegebühren anfallen. Insgesamt ist der ökonomische Effekt auf die Herstellungskosten einer Tonne dieses Bindemittels sehr hoch, da der Rohstoff (die Schlacke) gegen Zuzahlung erhältlich ist und in einem mechanischen Verfahren von anderen Materialienwie z.B. Schwermetallen -- getrennt sowie schließlich mit einem relativ geringen Energieaufwand in das Bindemittel CBS umgewandelt werden kann.

Der mit CBS hergestellte Beton besitzt eine bis zu 25 % höhere Druckfestigkeit und eine bis zu 50 % geringere Expansion. Damit tritt kaum eine Rissbildung auf. Der Produktionsprozess an sich ist relativ einfach und damit kostengünstig. Dies alles führt zu einer Kostenersparnis von bis zu 30 % gegenüber herkömmlichem Portlandzement.

Da die Schlacke nicht mehr deponiert wird, sondern sinnvoll als Rohstoff genutzt werden kann, ist der ökologische Nutzen groß. Da das Material in den vorherigen Prozessen bereits gebrannt wurde, ist der Energiebedarf für die Herstellung dieses Materials sehr gering. Die natürlichen Ressourcen, die herkömmlicherweise für die Zementherstellung Verwendung finden, werden geschont.

Die Stabilisierung bzw. Immobilisierung von Böden oder anderen Gemengen war schon immer ein großes Problem. Dieses konnte nur unter hohem Kostenaufwand und in unbefriedigender Weise gelöst werden. In den meisten Fällen ist eine Stabilisierung nach den konventionellen Methoden nur kurzzeitig wirksam. Zudem treten oft ökologische Probleme auf, die den Boden, aber auch das Grundwasser beeinträchtigen können.

Die als Bindemittel eingesetzten chemischen Produkte können im heterogenen Boden nur bedingt die Erwartungen an eine Stabilisierung erfüllen. Erdmaterialien ändern sich stetig in ihrer chemisch-mineralogischen und auch pysikalischen Zusammensetzung. Dies hat bisher eine erfolgreiche, nachhaltige Stabilisierung stark erschwert bzw. verhindert. Heterogene Gefüge, wie sie Erden und Böden aufweisen, erfordern alternative Produkte zur Stabilisierung und Immobilisierung. Das CBS-Consolid-Verfahren ist diese Alternative. Damit ist es nun möglich, unter Anwendung von CBS-Consolid Erden, Böden, Stäube und andere heterogene Produkte zu binden und nachhaltig zu verfestigen.

Vergleiche von unbehandelten und mit CBS-Consolid behandelten Proben ergeben deutliche Unterschiede in der Mikrostruktur und in den Eigenschaften des bodens oder der anderen Materialien. Durch die Behandlung mit CBS-Consolid wird die kapillare Steighöhe und damit die Wasserempfindlichkeit des Bodens deutlich erniedrigt.

Consolid besteht aus vorwiegend organischen Substanzen sowie aus zwei Phasen, nämlich der Flüssigphase Consolid⁴⁴⁴ (oder C444) sowie einer festen Phase Solidry. Die Flüssigphase ist eine Mischung monomolekularer und polymolekularer grenzflächenaktiver Substanzen, Lösungsvermittler, Emulgatoren und Katalysatoren mit einem Gehalt an Propylendiamin, Dimethylammoniumchlorid und Isopropyl-Alkohol (IPA) sowie den nachstehenden erfindungswesentlichen pyhsikalischen, chemischen und sicherheitstechnischen Eigenschaften:

| Aussehen: | |
|---|---|
| Form: | Flüssig |
| Farbe: | Gelbbraun |
| Geruch: | IPA |
| Zustandsänderung: | Erstarrungs-/Schmelzpunkt: 40-45°C |
| Dichte (bei 20°C): | 0.850 g/cm³ |
| Viskosität (bei 50°C): | ca. 10 cP |
| Löslichkeit in Wasser (40°C): | dispergierbar/mischbar 450 g/l |
| pH-Wert (1 g/lH₂O): | 5.5 bis 6.5 |
| Flammpunkt: | > 40°C |
| Zündtemperatur: | > 300°C |
| Explosionsgrenzen: | untere: 2 % vol. |
| | obere: 13 % vol. für IPA (rein) in Luft. |

Die feste -- pulverförmige -- Phase besteht als Solidry aus über 96 % feinstkörnigem handelsüblichem Zement und Kalkhydrat sowie 4 % organischem Anteil und folgenden erfindungswesentlichen pyhsikalischen und chemischen Eigenschaften:

| Aussehen: | |
|---|---|
| Form: | Fest |
| Farbe: | Gelblich |
| Geruch: | Aminisch |
| Physikalische Zustandsänderung: | |
| Schmelzpunkt/Schmelzbereich: | 50 bis 52°C |
| Dichte (75°C): | 0.858 g/cm³ |
| Viskosität (75°C): | < 100 mPa |
| Löslichkeit in Wasser (20°C): | Unlöslich |
| in Isopropanol (55°C): | 50 g/l |
| pH-Wert (50 g/lH₂O, 50°C): | 9 bis 10 IPA/Wasser |
| Flammpunkt: | > 170°C |

Diese organische Komponente ist eine parafinartige Mischung monomolekularer und polymolekularer grenzflächenaktiver Substanzen mit einem bestimmten Gehalt an Alkylaminen und Dimethylammoniumchlorid, Polyacrylaten und Reaktionsmitteln.

Das grundsätzliche Wissen über die Wirkungsweise des Consolid-Systems führt zu der Erkenntnis, dass das Consolid im Poren- und Mikroporenbereich der Böden grenzflächenaktiv wirkt, den Haftwasserfilm löst, wobei es dadurch vorrangig zu einer irreversiblen Agglomeration der Fein- und Feinstteilchen des behandelten Bodens kommt und über die Aktivierung der bodeneigenen Bindekräfte -- Erhöhung der Kohäsion und des inneren Reibungswinkels -- eine hohe Verdichtbarkeit des Bodens bewirkt(Giurgea et al., 1998).

Der Wirkstoff Solidry entsteht durch eine mechanische Beaufschlagung in einer Kugelmühle oder einem Prallmischer eines hydraulischen Bindemittels wie CBS oder Zement, wobei es zu einer vollständigen Umhüllung der Zement- bzw. Kalkhydratkörnchen durch eine parafinartige Komponente kommt. Das Trockenprodukt Solidry wirkt wasserabweisend und führt zu einer Wasserunempfindlichkeit des Bodens, verstärkt die bodeneigene Bindewirkung (Kohäsion, Festigkeit). Gleichzeitig verhindert es durch das Quellverhalten der Wirkstoffe das Eindringen des Oberflächenwassers in die Kapillaren des Bodens und reduziert zusammen mit Consolid^{444 ®} das kapillare Ansteigen des Wassers im Boden. Diese Feststoffe sind somit hauptsächlich als "Füllung" mit ausgeprägtem synergetischem Effekt in Bezug auf den Kapillarraum des Bodens zu sehen (Merkler et. al. 1996; Giurgea et al., 1998).

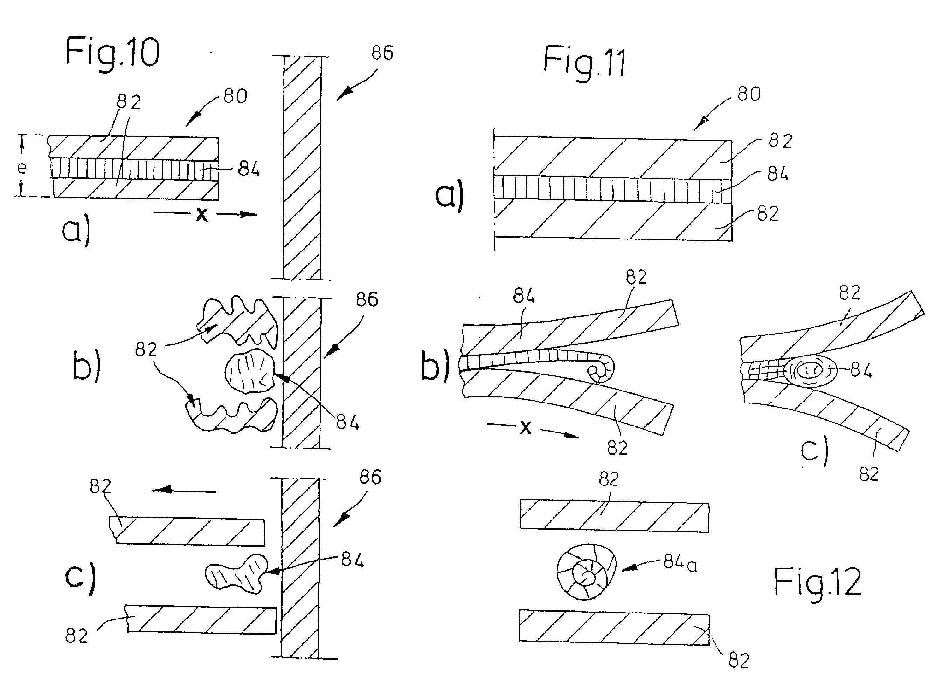

In den Fig. 10 bis 14 wird das Trennen von Verbundstoffen im Bereich der Impact-Anlage 60 verdeutlicht. Ein Verbundstreifen 80 der Dicke e mit einer beidseits von PE-Schichten 82 abgedeckten mittleren Schicht 84 aus einer Aluminiumlegierung wird in Förderrichtung x einer diese kreuzenden Prallwand 86 zugeführt (Fig. 10). Dank des Impulses der Beschleunigung und eines abrupten Abbruchs dieses Impulses an der Prallwand 86 sowie den auftretenden Schockwellen zwischen den Schichten 82, 84 des Verbundstreifens 80 werden die physikalischen Unterschiede der verschiedenen Materialien -- wie Dichte, Elastizität, Duktilität od.dgl. -- so genutzt, dass sich aufgrund des unterschiedlichen Verhaltens der Bestandteile 82, 84 des Verbundstreifens 80 diese voneinander trennen.

Durch den Aufprall auf die Prallwand 86 werden zur Deformation neigende Werkstoffe -- beispielsweise die Aluminiumschicht 84 -- verformt, wohingegen elastische Materialien - - also die beiden Kunststoff-Schichten 82 -- die Aufprallenergie absorbieren mit der Folge, dass diese PE-Schichten 82 keine -- oder nur eine geringe -- Veränderung ihrer Struktur erfahren. Wird nämlich ein Verbundstoff 80 einer solchen Behandlung unterzogen, wird die Metallschicht 84 deformiert, während sich die Kunststoffschichten 82 nach einer kurzzeitigen Deformation aufgrund der Rückstellkraft in ihren ursprünglichen Zustand zurück verformen. Dieses unterschiedliche Verhalten der Verbundmaterialien 82, 84 hat zur Folge, dass zwischen ihnen eine Scherkraft entsteht, welche die Schichten 82, 84 entlang ihrer Phasengrenzen aufschließt. In Gemischen erfolgt kein Aufschluss, jedoch erfahren die in der Mischung vorhandenen Materialien aufgrund der physikalischen Unterschiede auch unterschiedliche Strukturen. So ergeben sich -- in Abhängigkeit von den oben genannten physikalischen Eigenschaften -- unterschiedliche charakteristische Strukturen der Materialien.

Der Schritt b) in Fig. 10 zeigt die erhebliche und bleibende Deformation der Aluminiumschicht 84 sowie die sehr kurzzeitige Deformation der beiden Kunststoffschichten 82; zwischen den Werkstoffen der Schichten 82, 84 entsteht eine Scherkraft an den Phasengrenzen.

Im Schritt c) der Fig. 10 prallen sowohl die Aluminiumschicht 84 -- nun in Kugelform -- gegen die Impulsrichtung x ab als auch die Kunststoffschichten 82, welch letztere sich in Folge der Rückstellkraft aus der Deformationssituation des Schrittes b) wieder gestreckt haben. Metalle werden verformt und erhalten dadurch eine Kugelstruktur, die sich aus einer aufgerollten Metallschicht 84 ergibt; diese Kugeln 84ₐ haben nun ein Mehrfaches an Durchmesser als zuvor in der flächigen Struktur vor der Behandlung.

Die beschriebenen Veränderungen sind in Fig. 11, 12 verdeutlicht. Schritt a) der Fig. 11 zeigt hier das Ausgangsprodukt 80 mit seinen streifenförmigen Schichten 82, 84. Bei b) ist ein fortschreitender Aufschluss zu erkennen; die Schichten 82 klaffen maulartig auseinander, und die mittlere Al-Schicht 84 beginnt sich gegen die Impulsrichtung x zungenartig einzurollen. Im Schritt c) verkugelt sich die Mittelschicht 84 zunehmend und erreicht gemäß Fig. 12 die Kugelform 84ₐ; die Schichten 82 sind -- wie oben beschrieben -- in ihre Ursprungsform zurückgeführt.

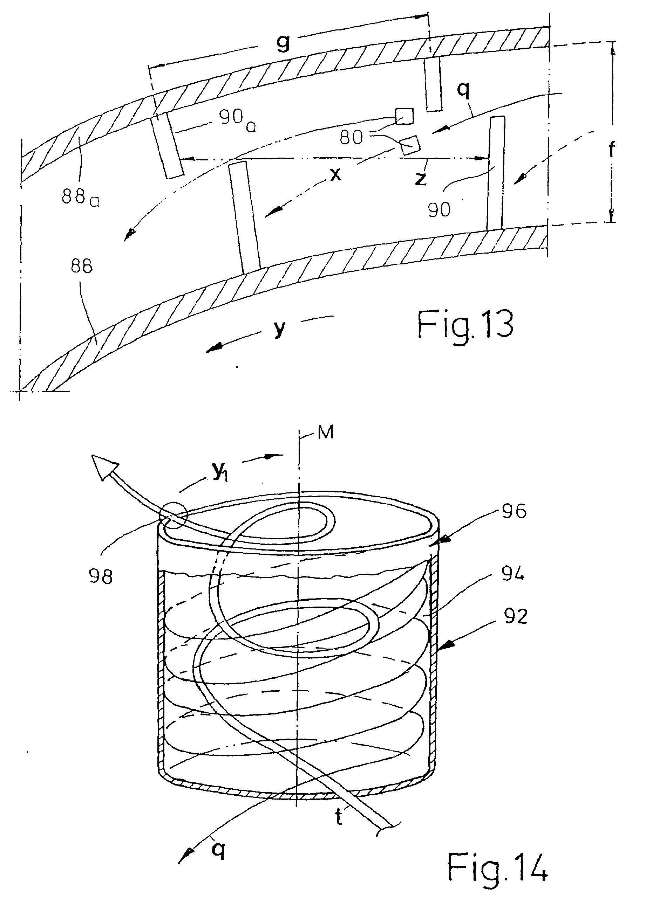

In Fig. 13 ragen von zwei in lichtem radialem Abstand f parallel gekrümmten Wandflächen 88, 88ₐ zueinander gerichtete Prallflächen 90, 90ₐ im horizontalen Abstand g voneinander ab, wobei sich eine der Wandflächen 88 relativ zur anderen Wandfläche 88ₐ in Richtung y dreht und zwar in Förderrichtung x der Verbundwerkstoffe 80. Mit z ist eine Linie bezeichnet, die eine Prallbewegung von Partikeln andeutet.

In Fig. 14 ist ein Rotor 92 mit Rotations- oder Drehrichtung y₁ um die Rotorachse M angedeutet, dessen Rotorraum 94 durch einen Werkstoffeintrag 96 von oben her ein Werkstoffgemisch zugeführt wird. Die Verbundstoffe 80 des Werkstoffgemisches werden durch die Schwerkraft abwärts geführt - der spiralenartige Förderweg ist bei q angedeutet. Von unten her wird Prozessluft eingebracht, deren Strömungsweg t entgegen jenem Förderweg q erfolgt. Durch die aufsteigende Luft wird die Verweilzeit der Verbundwerkstoffe 80 im Rotorraum 94 beeinflusst, und es werden leicht flugfähige Partikel und Stäube in einem Zyklon mitgerissen, die mit der Prozessluft den Rotor 92 bei einem Auslass 98 verlassen.

## Patentansprüche

1. Deponie für die Lagerung von Abfällen und Reststoffen aus festen organischen oder anorganischen Stoffen, Verbundstoffen bzw. Gemischen daraus, wobei
in Erdreich (22) eine Wanne (12) mit Wannenboden (14) und Seitenwänden (15) angeordnet ist, **dadurch gekennzeichnet, dass** die Wannenboden zumindest zwei wasserdichte Schichten (B, C) mit Bestandteilen eines keramischen Bindemittelsystems (CBS) enthält.

2. Deponie nach Anspruch 1. **dadurch gekennzeichnet, dass** zwischen der obenliegenden wasserdichten Schicht (C) und Deponiegut (24, 24ₐ) zumindest eine wasserdichte Kunststofffolie (26) flächig angeordnet ist.

3. Deponie nach Anspruch 2, **dadurch gekennzeichnet, dass** auf der Kunststofffolie (26) verfestigtes Haufwerk als Deponiegut (24ₐ) gelagert ist.

4. Deponie nach einem der Ansprüche 1 bis 3, **gekennzeichnet durch** einen Winkel (w) von 90° bis 150°, bevorzugt etwa 130°, zwischen Wannenboden (14) und Seitenwand (15).

5. Deponie nach einem der Ansprüche 1 bis 4, **dadurch gekennzeichnet, dass** der Wannenboden (14) in einem Winkel bis zu etwa 10° zur Horizontalen geneigt ist.

6. Deponie nach einem der Ansprüche 1 bis 5, **gekennzeichnet durch** eine Abdeckung (20), die wenigstens zwei wasserdichte Schichten (B, C) enthält, auf denen zumindest eine Sickerschicht (D) zur Abführung von Regenwasser angeordnet ist.

7. Deponie nach Anspruch 6, **dadurch gekennzeichnet, dass** die Sickerschicht (D) mit einer Drainage (28) ausgestattet ist.

8. Deponie nach Anspruch 6 oder 7, **dadurch gekennzeichnet, dass** die Sickerschicht (D) von einer Humusschicht (E) überlagert ist, die gegebenenfalls eine geringmächtige Slurry-Schicht (F) als Erosionsschutz trägt.

9. Deponie nach wenigstens einem der Ansprüche 1 bis 8, **gekennzeichnet durch** ein in den wasserdichten Schichten (B, C) vorgesehenes anorganisches Bindemittel für hydraulische, erhärtende Massen, bei dem Kieselsäure, Tonerde, Eisenoxide und/oder Kalk enthaltende Stoffe vermengt, gemahlen und bis zur Sinterung gebrannt sind.

10. Deponie nach einem der Ansprüche 1 bis 9, **dadurch gekennzeichnet, dass** das Bindemittelsystem eine Flüssigphase sowie eine feste Phase umfasst, welch letztere aus feinstkörnigem hydraulischem Bindemittel und Kalkhydrat sowie bis zu 10 %, bevorzugt etwa 4 %, organischem Anteil besteht.

11. Deponie nach Anspruch 10, **dadurch gekennzeichnet, dass** die Flüssigphase eine Mischung monomolekularer und polymolekularer grenzflächenaktiver Substanzen, Lösungsvermittler, Emulgatoren und Katalysatoren mit einem Gehalt an Propylendiamin, Dimenthylammoniumchlorid und Isopropyl-Alkohol ist.

12. Deponie nach wenigstens einem der voraufgehenden Ansprüche, **dadurch gekennzeichnet, dass** durch das keramische Bindemittelsystem eine irreversible Agglomeration der Fein- und Feinstteilchen der behandelten Schicht gegeben ist mit einer hohen Verdichtung des mit dem Bindemittelsystem verbundenen Bodenanteils.

13. Deponie nach wenigstens einem der voraufgehenden Ansprüche, **dadurch gekennzeichnet, dass** die in ihrem Innenraum (18) gelagerten Abfälle (24, 24ₐ) od.dgl. Stoffe durch die Beigabe mineralischer Komponenten gebunden sind, insbesondere durch das keramische Bindemittelsystem (CBS).

14. Verfahren zum Behandeln von Abfällen und Reststoffen aus festen organischen oder anorganischen Stoffen, Verbundstoffen bzw. Gemischen daraus, insbesondere Hausmüll, als Anteile einer Deponie nach wenigstens einem der voraufgehenden Ansprüche 1 - 13, **dadurch gekennzeichnet, dass** die Abfälle und Reststoffe entwässert, enthaltene Biomasse abgetrennt wird und anschließend eine Separation von Metallen/Kunststoffen erfolgt, welche in Wirtschaftskreisläufe als Sekundär-Rohstoffe zurückgeführt werden, und nach der Reststoffseparation Mineralstoffe aus der Restmüllfraktion und/oder den Reststoffen und/oder aus letzteren entstehender Asche als Rohmaterial zum Herstellen des Bindemittels (CBS) eingesetzt werden und/oder mit gesondert zugeführten Schlacken bzw. Aschen zu dem keramischen Bindemittel verarbeitet werden und in Erdreich (22) eine Wanne (12) mit Wannenboden (14) und Seitenwänden (15) angeordnet wird, deren Wannenboden zumindest zwei wasserdichte Schichten (B, C) mit Bestandteilen das keramischen Bindemittelsystems (CBS) enthält.

15. Verfahren nach Anspruch 14, **dadurch gekennzeichnet, dass** vor dem Einleiten der Abfälle in die Deponie diese durch die Beigabe mineralischer Komponenten gebunden sowie eigene Bindekräfte aktiviert werden.

16. Verfahren nach Anspruch 14 oder 15, **dadurch gekennzeichnet, dass** Schadstoffe in den Abfallen immobilisiert werden.

17. Verfahren nach einem der Ansprüche 14 bis 16, **gekennzeichnet durch** die während dessen Durchführung hergestellten Hauptfraktion in Form von:
Wasser;
Biomasse/Kompost/Biogas;
Metalle wie Al, Fe, Cu-Metalle od.dgl.;
Restmüllfraktionen;
Reststoffe.

18. Verfahren nach einem der Ansprüche 14 bis 17, **dadurch gekennzeichnet, dass** Schlacke gesiebt sowie während eines Zerkleinerungsvorganges mit Hüttensand und/oder Kraftwerksasche und/oder Geztistsilikaten gemischt wird.

19. Verfahren nach wenigstens einem der Ansprüche 14 bis 18, **dadurch gekennzeichnet, dass** in dem Verbundstoff oder dem Gemisch durch eine dessen Fluss plötzlich unterbrechende Einrichtung der Aufschluss bzw. eine Trennung der Bestandteile mittels eines Impulses durchgeführt wird.

20. Verfahren nach Anspruch 19, **dadurch gekennzeichnet, dass** dem in einem Rotor (26) mit vertikaler Achse spiralartig abwärts erzeugten Förderweg Prozessluft in einem steigenden Strömungsweg gegenläufig zugeführt wird.

21. Verfahren nach Anspruch 20, **dadurch gekennzeichnet, dass** an einer Prallwand des Rotors zwischen den Schichten de Verbundstoffes eine Schockwelle erzeugt wird.

22. Verfahren nach Anspruch 20 oder 21, **dadurch gekennzeichnet, dass** sich zwei einander in radialem Abstand koaxial zugeordnete Wandflächen relativ zueinander um ihre Achse drehen und zwischen von den Prallwänden radial abragenden Prallflächen die von Zentrifugalkräften bewegten Verbundstoffe bzw. Gemische bewegt und auf schlossen werden.

23. Verfahren nach einem der Ansprüche 14 bis 22, **dadurch gekennzeichnet, dass** der Verbundstoff (10) bei Aufprall auf eine Prallwand (20) aufgeschlossen wird und seine metallischen Bestandteile kugelartig verformt werden, wobei gegebenenfalls während des Verformungsvorganges der schichtartige metallische Bestandteil aufgerollt wird.

24. Verfahren nach einem der Ansprüche 14 bis 23, **dadurch gekennzeichnet, dass** das Verbundelement vor dem Trenn- oder Aufschließvorgang einer thermischen Vorbehandlung unterzogen wird, wobei gegebenenfalls der Austrag aus dem Trenn- oder Aufschließvorgang einem Separations- und/oder Siebvorgang und/oder einem Abtrennvorgang für Nichteisenmetalle unterzogen wird.

25. Verfahren nach einem der Ansprüche 14 bis 24, **dadurch gekennzeichnet, dass** die Metall- und/oder Kunststoffteile nach dem Separieren verdichtet und gegebenenfalls nach dem Separarieren extrudiert werden.

26. Verfahren nach einem der Ansprüche 14 bis 25, **dadurch gekennzeichnet, dass** die Kunststoffe durch turbolaminare Separation und/oder Identifikation voneinander getrennt werden.

27. Vorrichtung zur Durchführung des Verfahrens nach wenigstens einem der Ansprüche 14 bis 26 zur Herstellung des Bindemittels aus den Abfällen und Reststoffen, **dadurch gekennzeichnet, dass** in dem Innenraum (94) eines Rotors (92) ein Förderweg (q) für ein die Abfälle und Reststoffe (82) enthaltendes Gemisch gegenläufig zum Strömungsweg (t) von Prozessluft geführt ist, wobei der Förderweg (t) zwischen zwei zueinander in Abstand (g) relativ bewegbaren Wandflächen (90, 90ₐ) verläuft, von denen in den Förderweg beidseits sowie zueinander versetzte Prallflächen (90, 90ₐ) abragen.

28. Vorrichtung nach Anspruch 27, **dadurch gekennzeichnet, dass** die Werkstoffzuführung (96) im Firstbereich des Rotors (92) angeordnet ist.

29. Vorrichtung nach Anspruch 27 oder 28, **dadurch gekennzeichnet, dass** die Wandflächen (90, 90ₐ) koaxial gekrümmt sind.

30. Vorrichtung nach einem der Anspruch 27 - 29, **dadurch gekennzeichnet, dass** die Wandflächen (90, 90ₐ) in Rotationsrichtung (y₁) des Rotors (92) drehbar gelagert sind.

## Claims

1. Disposal site for storing waste and residual materials from solid organic or inorganic materials, composite materials or mixtures thereof, wherein a trough (12) with trough base (14) and side walls (15) is arranged in the ground (22), **characterised in that** the trough base contains at least two water-tight layers (B, C) with constituents of a ceramic binder system (CBS).

2. Disposal site according to claim 1, **characterised in that** at least one water-tight plastic film (26) is arranged flat between the upper-lying water-tight layer (C) and disposal site material (24, 24ₐ).

3. Disposal site according to claim 2, **characterised in that** solidified debris as disposal site material (24ₐ) is stored on the plastic film (26).

4. Disposal site according to one of claims 1 to 3, **characterised by** an angle (w) of 90° to 150°, preferably about 130°, between trough base (14) and side wall (15).

5. Disposal site according to one of claims 1 to 4, **characterised in that** the trough base (14) is inclined at an angle up to about 10° to the horizontal.

6. Disposal site according to one of claims 1 to 5, **characterised by** a cover (20), which contains at least two water-tight layers (B, C), on which at least one percolation layer (D) is arranged for removing rain water.

7. Disposal site according to claim 6, **characterised in that** the percolation layer (D) is equipped with drainage (28).

8. Disposal site according to claim 6 or 7, **characterised in that** the percolation layer (D) is superimposed by a humus layer (E), which optionally carries a thin slurry layer (F) as erosion protection.

9. Disposal site according to at least one of claims 1 to 8, **characterised by** an inorganic binder for hydraulic, solidifying compositions provided in the water-tight layers (B, C), in which silicic acid, alumina, iron oxides and/or materials containing lime are mixed, ground and fired to sintering.

10. Disposal site according to one of claims 1 to 9, **characterised in that** the binder system comprises a liquid phase and a solid phase, which latter phase consists of finest-grain hydraulic binder and lime hydrate and up to 10%, preferably about 4%, organic content.

11. Disposal site according to claim 10, **characterised in that** the liquid phase is a mixture of monomolecular and polymolecular surfactant substances, solubility promoters, emulsifiers and catalysts containing propylene diamine, dimenthyl ammonium chloride and isopropyl alcohol.

12. Disposal site according to at least one of the preceding claims, **characterised in that** irreversible agglomeration of the fine and very fine particles of the treated layer is provided by the ceramic binder system with high compaction of the soil content bound to the binder system.

13. Disposal site according to at least one of the preceding claims, **characterised in that** the waste (24, 24ₐ) or similar materials stored in its interior (18) are bound by the addition of mineral components, in particular by the ceramic binder system (CBS).

14. Process for treating waste and residual materials from solid organic or inorganic materials, composite materials or mixtures thereof, in particular household waste, as contents of a disposal site according to at least one of the preceding claims 1 to 13, **characterised in that** the biomass containing dehydrated waste and residual materials is separated off and then separation of metals/plastics takes place, which are returned in economic cycles as secondary raw materials, and after residual material separation, mineral materials from the residual waste fraction and/or the residual materials and/or ash being produced from the latter are used as raw material for producing the binder (CBS) and/or are processed with separately supplied slags or ashes to form the ceramic binder and a trough (12) with trough base (14) and side walls (15) is arranged in the ground (22), the trough base of which contains at least two water-tight layers (B, C) with constituents of the ceramic binder system (CBS).

15. Process according to claim 14, **characterised in that** before introducing the waste into the disposal site, it is bound by the addition of mineral components and inherent binding forces are activated.

16. Process according to claim 14 or 15, **characterised in that** toxic substances in the waste are immobilised.

17. Process according to one of claims 14 to 16, **characterised by** the main fraction produced during its implementation in the form of:
water;
biomass/compost/biogas;
metals, such as Al, Fe, Cu metals or the like;
residual waste fractions;
residual materials.

18. Process according to one of claims 14 to 17, **characterised in that** slag is sifted and during a comminution process is mixed with metallurgical sand and/or power station ash and/or tectosilicates.

19. Process according to at least one of claims 14 to 18, **characterised in that** digestion or separation of the constituents is carried out by means of a pulse in the composite material or the mixture by a device suddenly interrupting its flow.

20. Process according to claim 19, **characterised in that** process air in a rising flow path is supplied in opposite direction to the conveying path produced spirally downwards in a rotor (26) with vertical axis.

21. Process according to claim 20, **characterised in that** a shock wave is produced on a baffle wall of the rotor between the layers of the composite material.

22. Process according to claim 20 or 21, **characterised in that** two wall surfaces assigned coaxially to one another at radial distance are rotated relative to one another about their axis and the composite materials or mixtures moved by centrifugal forces are agitated and digested between baffle surfaces projecting radially from the baffle walls.

23. Process according to one of claims 14 to 22, **characterised in that** the composite material (10) is digested on collision with a baffle wall (20) and its metallic constituents are shaped to be spherical, wherein the layer-like metallic constituent is rolled up optionally during the shaping process.

24. Process according to one of claims 14 to 23, **characterised in that** the composite element is subjected to thermal pre-treatment before the separation or digestion process, wherein the discharge from the separation or digestion process is optionally subjected to a separation and/or sifting process and/or a separating process for non-ferrous metals.

25. Process according to one of claims 14 to 24, **characterised in that** the metal and/or plastic parts are compacted after separation and optionally extruded after separation.

26. Process according to one of claims 14 to 25, **characterised in that** the plastics are separated from one another by turbo-laminar separation and/or identification.

27. Device for carrying out the process according to at least one of claims 14 to 26 for producing the binder from the waste and residual materials, **characterised in that** in the interior (94) of a rotor (92), a conveying path (q) for a mixture containing the waste and residual materials (82) is guided in opposite direction to the flow path (t) of process air, wherein the conveying path (t) runs between two wall surfaces (90, 90ₐ) which can be moved relative to one another at distance (g), and from which baffle surfaces (90, 90ₐ) project into the conveying path on both sides and offset with respect to one another.

28. Device according to claim 27, **characterised in that** the material supply (96) is arranged in the first region of the rotor (92).

29. Device according to claim 27 or 28, **characterised in that** the wall surfaces (90, 90ₐ) are curved coaxially.

30. Device according to one of claims 27 - 29, **characterised in that** the wall surfaces (90, 90ₐ) are mounted to be rotatable in rotation direction (y₁) of the rotor (92).

## Revendications

1. Décharge pour le stockage de déchets et résidus provenant de matières organiques ou inorganiques solides, composites ou mélanges de celles-ci, où
une cuve (12) ayant un fond de cuve (14) et des parois latérales (15) est disposée dans le sol (22), **caractérisée en ce que** le fond de cuve comprend au moins deux couches étanches à l'eau (B, C) ayant des composants d'un système de liant céramique (CBS).

2. Décharge selon la revendication 1, **caractérisée en ce qu'**au moins un film plastique (26) étanche à l'eau est disposé en grande surface entre la couche étanche à l'eau située sur le haut (C) et la matière mise en décharge (24, 24ₐ).

3. Décharge selon la revendication 2, **caractérisée en ce que** sur le film plastique (26), des déblais solidifiés sont stockés à titre de matière mise en décharge (24a).

4. Décharge selon l'une des revendications 1 à 3, **caractérisée par** un angle (w) de 90° à 150°, de préférence d'environ 130°, entre le fond de cuve (14) et la paroi latérale (15).

5. Décharge selon l'une des revendications 1 à 4, **caractérisée en ce que** le fond de cuve (14) est incliné à un angle allant jusqu'à 10° par rapport à l'horizontale.

6. Décharge selon l'une des revendications 1 à 5, **caractérisée par** une couverture (20), qui contient au moins deux couches étanches à l'eau (B, C), sur lesquelles est disposée au moins une couche d'infiltration (D) pour l'évacuation des eaux de pluie.

7. Décharge selon la revendication 6, **caractérisée en ce que** la couche d'infiltration (D) est munie d'un drainage (28).

8. Décharge selon la revendication 6 ou 7, **caractérisée en ce que** la couche d'infiltration (D) est superposée d'une couche d'humus (E), qui porte le cas échéant une couche de boue (F) de faible épaisseur à titre de protection contre l'érosion.

9. Décharge selon au moins une des revendications 1 à 8, **caractérisée par** un liant inorganique prévu dans les couches étanches à l'eau (B, C) pour des masses hydrauliques durcissantes, dans lequel des substances contenant de l'acide silicique, de l'argile, des oxydes de fer et/ou de la chaux sont mélangées, broyées et brûlées jusqu'au frittage.

10. Décharge selon une des revendications 1 à 9, **caractérisée en ce que** le système de liant comprend une phase liquide et une phase solide, cette dernière se composant d'un liant hydraulique de la granulométrie la plus fine et de chaux hydratée et jusqu'à 10 %, de préférence environ 4 % d'une partie organique.

11. Décharge selon la revendication 10, **caractérisée en ce que** la phase liquide est un mélange de tensioactifs, d'agents de dissolution, d'émulsifiants et de catalyseurs monomoléculaires et polymoléculaires avec une teneur en propylène diamine, chlorure de diméthylammonium et alcool isopropylique.

12. Décharge selon au moins une des revendications précédentes, **caractérisée en ce que** le système de liant céramique provoque une agglomération irréversible des particules fines et les plus fines de la couche traitée avec une haute compression de la proportion du fond liée au système de liant.

13. Décharge selon au moins une des revendications précédentes, **caractérisée en ce que** les déchets (24, 24ₐ) stockés dans son espace interne (18) ou substances similaires sont liés par l'addition de composants minéraux, en particulier par le système de liant céramique (CBS).

14. Procédé de traitement des déchets et résidus de matières organiques ou inorganiques solides, composites ou mélanges de celles-ci, en particulier de déchets ménagers, en tant que parties d'une décharge selon au moins une des revendications précédentes 1 à 13, **caractérisé en ce que** l'on sépare la biomasse contenant les déchets et résidus desséchés et qu'ensuite, on réalise une séparation métaux/plastiques, qui sont renvoyés dans des circuits économiques à titre de matières premières secondaires, et que l'on met en oeuvre, après la séparation des résidus, des substances minérales provenant de la fraction des ordures résiduelles et/ou des résidus et/ou des cendres provenant de ces derniers à titre de matière première pour la fabrication du liant (CBS) et/ou que l'on transforme avec des scories amenées séparément ou des cendres en le liant céramique et que l'on dispose dans le sol (22) une cuve (12) avec un fond de cuve (14) et des parois latérales (15), dont le fond de cuve contient au moins deux couches étanches à l'eau (B, C) avec des composants du système de liant céramique (CBS).

15. Procédé selon la revendication 14, **caractérisé en ce que**, avant l'introduction des déchets dans la décharge, ceux-ci sont liés par l'addition de composants minéraux et leurs propres forces de liaisons sont activées.

16. Procédé selon la revendication 14 ou 15, **caractérisé en ce que** les substances nocives dans les déchets sont immobilisées.

17. Procédé selon l'une des revendications 14 à 16, **caractérisé par** la fraction principale créée au cours de sa réalisation sous la forme de :
eau ;
biomasse/ compost / biogaz ;
métaux comme Al, Fe, métaux Cu ou similaire ;
fractions d'ordures résiduelles ;
résidus.

18. Procédé selon l'une des revendications 14 à 17, **caractérisé en ce que** des scories sont tamisées et mélangées avec du sable métallurgique et/ou des cendres de centrale et/ou des tectosilicates au cours d'un procédé de concassage.

19. Procédé selon l'une des revendications 14 à 18, **caractérisé en ce que** l'on réalise la désagrégation ou une séparation des composants au moyen d'une impulsion dans le composite ou le mélange par le biais d'un dispositif qui en interrompt subitement le flux.

20. Procédé selon la revendication 19, **caractérisé en ce que** l'on amène à contre-courant de l'air de procédé dans une voie de courant montante à la voie de transport, produite dans un rotor (26) avec un axe vertical à la manière d'une spirale dans le sens de l'aval.

21. Procédé selon la revendication 20, **caractérisé en ce qu'**une onde de choc est produite sur une paroi de rebondissement du rotor entre les couches du composite.

22. Procédé selon la revendication 20 ou 21, **caractérisé en ce que** deux surfaces de paroi associées réciproquement coaxialement à une distance radiale tournent l'une par rapport à l'autre autour de leur axe et **en ce que** les composites ou mélanges déplacés par les forces centrifuges sont déplacés et désintégrés entre des surfaces de rebondissement saillant radialement des parois de rebondissement.

23. Procédé selon l'une des revendications 14 à 22, **caractérisé en ce que** le composite (10) est désintégré lors de son rebond sur une paroi de rebondissement (20) et que ses composants métalliques sont déformés à la manière d'une sphère, le composant métallique de type couche étant le cas échéant laminé au cours du procédé de déformation.

24. Procédé selon l'une des revendications 14 à 23, **caractérisé en ce que** l'élément composite est soumis avant le procédé de séparation ou de désintégration à un prétraitement thermique, l'extrait du procédé de séparation ou de désintégration étant soumis le cas échéant à un procédé de séparation et/ou de criblage et/ou à un procédé de tri des métaux non ferreux.

25. Procédé selon l'une des revendications 14 à 24, **caractérisé en ce que** les fractions métalliques et/ou plastiques sont compressées avant la séparation et le cas échéant extrudées après la séparation.

26. Procédé selon l'une des revendications 14 à 25, **caractérisé en ce que** les plastiques sont séparés les uns des autres par séparation et/ou identification turbolaminaire.

27. Dispositif pour la réalisation du procédé selon au moins une des revendications 14 à 26 pour la fabrication du liant à partir des déchets et résidus, **caractérisé en ce que**, dans l'espace interne (94) du rotor (92), une voie de transport (q) pour un mélange contenant les déchets et résidus (82) est amenée à contre-courant de la voie du courant (t) de l'air de procédé, la voie de transport (t) courant entre deux surfaces de paroi (90, 90ₐ) mobiles l'une par rapport à l'autre à une distance (g), dont saillent des surfaces de rebondissement (90, 90ₐ) décalées des deux côtés et l'une par rapport à l'autre dans la voie de transport.

28. Dispositif selon la revendication 27, **caractérisé en ce que** l'amenée de matériaux (96) est disposée dans la zone de voûte du rotor (92).

29. Dispositif selon la revendication 27 ou 28, **caractérisé en ce que** les surfaces de paroi (90, 90ₐ) sont courbées dans le sens coaxial.

30. Dispositif selon l'une des revendications 27 - 29, **caractérisé en ce que** les surfaces de paroi (90, 90ₐ) sont disposées de manière à être rotatives dans la direction de rotation (y₁) du rotor (92).
